Europäisches Patentamt

European Patent Office

Office européen des brevets

(19)

(11) Numéro de publication: **0014125**
**A1**

# (12) DEMANDE DE BREVET EUROPEEN

(21) Numéro de dépôt: **80400054.5**

(22) Date de dépôt: **15.01.80**

(51) Int. Cl.³: **B 29 F 3/01**

(30) Priorité: **18.01.79 FR 7901229**

(43) Date de publication de la demande: **06.08.80**
**Bulletin 80/16**

(84) Etats contractants désignés: **AT BE CH DE GB IT LU NL SE**

(71) Demandeur: **Société Anonyme Française EMS INDUSTRIE, 79, rue de Stalingrad, F-93001 Bobigny (FR)**

(72) Inventeur: **Tesson, Jacques, 84, Boulevard Gambetta, F-94130 Nogent Sur Marne (FR)**

(74) Mandataire: **Bouju, André et al, 38 Avenue de la Grande Armée, F-75017 Paris (FR)**

(54) **Malaxeur en continu pour polymères.**

(57)   Le malaxeur de polymères comprend un corps (1) comportant un alésage interne (5) dans lequel est monté en rotation un rotor (6) pourvu de pales (7). Des moyens d'introduction (8, 22) servent à introduire sous pression les polymères (23) dans l'alésage (5). Un jeu réglable (j) est prévu entre le sommet des pales (7) du rotor (6) et l'alésage (5) du corps (1).

Le malaxeur comprend des moyens pour régler automatiquement le jeu (j) à partir de paramètres qui sont fonction de la résistance rencontrée par le rotor (6) lors du malaxe des polymères.

Application, en particulier, à la production de matières plastiques semi-finies destinées à être extrudées, laminées, etc . . .

La présente invention concerne un malaxeur en continu pour polymères, notamment pour matières thermoplastiques et élastomères.

Pour rendre un polymère apte à être extrudé, laminé ou injecté dans des appareils appropriés de fabrication d'objets finis en matière plastique, il est courant de malaxer le polymère initial.

A cet effet, le polymère initial éventuellement mélangé à d'autres polymères, plastifiants, charges et autres adjuvants, est introduit dans un malaxeur. Dans un tel malaxeur, le polymère est soumis à des contraintes mécaniques, telles que compressions, frictions et cisaillements qui ont pour but de transformer le produit de départ en un produit pâteux, de consistance homogène, constituant un produit semi-final, apte à être transformé en objet fini en matière plastique.

Pour malaxer les polymères, il est connu d'utiliser un appareil fonctionnant en discontinu et comprenant un carter dans lequel tournent deux cylindres parallèles munis de pales, les polymères étant malaxés entre ces deux cylindres, jusqu'à l'obtention de la consistance pâteuse désirée, après quoi le produit résultant est évacué de l'appareil.

Dans un tel appareil, le fonctionnement en discontinu entraîne une surveillance continuelle du fonctionnement de l'appareil et des manipulations nombreuses. La puissance consommée est cyclique et pour une valeur d'énergie moyenne absorbée, la puissance installée est très importante.

En outre, le fonctionnement discontinu impose l'installation d'un appareil de stockage tampon pour recevoir le produit malaxé et assurer son débit continu ultérieur.

Il est connu, par ailleurs, de réaliser des extrudeuses pour polymères comprenant une vis d'alimentation et de malaxage dans laquelle un jeu est ménagé entre le sommet des filets de la vis et le corps de l'appareil, les polymères étant malaxés en passant entre le sommet des filets et ce corps. Dans ces extrudeuses connues, un circuit de refroidissement à débit réglable est pratiqué dans le corps et/ou dans la vis pour éviter tout échauffement excessif de la matière.

Cependant, dans une telle extrudeuse, il est très difficile, voire même impossible de contrôler la température atteinte par les polymères en cours de malaxage. Or cette température èst déterminante pour la qualité de produit obtenu. La plage de réglage de cette température est trop restreinte pour la plupart des applications, notamment si on change la matière première, ou si on change l'état dans lequel elle est introduite, à savoir pâte, poudre ou granulés. De plus, dans cet appareil connu, la limitation de la température s'effectue en évacuant l'énergie calorifique produite par dissipation de l'énergie mécanique fournie par le moteur. Cet appareil connu conduit donc à une consommation excessive d'énergie mécanique, dont il faut ensuite évacuer une partie sous forme calorifique.

Dans une extrudeuse de ce type, un rotor portant des pales dont les sommets balayent une surface tronconique est monté en rotation dans un alésage tronconique. Un jeu est compris entre le sommet des pales du rotor et l'alésage adjacent. Ce jeu est réglable manuellement par déplacement axial du rotor relativement à l'alésage tronconique, pour compenser l'usure des pièces. Une telle extrudeuse ne peut pas non plus convenir pour malaxer en continu des polymères.

Le but de la présente invention est de remédier aux inconvénients des appareils connus en réalisant un malaxeur en continu pour polymère(s) dans lequel il est possible de régler efficacement la température de malaxage sans consommation excessive d'énergie mécanique.

Le malaxeur, visé par l'invention, comprend un corps comportant un alésage interne dans lequel est monté en rotation un rotor portant des pales, et des moyens d'introduction pour introduire sous pression un ou des polymères dans l'alésage précité, ce(s) polymère(s) étant à l'état granuleux, pulvérulent ou pâteux la surface balayée par les sommets des pales du rotor étant sensiblement tronconique, la surface de l'alésage adjacente à ce rotor étant complémentaire de la surface balayée précitée, et comprend des moyens pour déplacer axialement le rotor par rapport au corps pour pouvoir régler le jeu entre les sommets des pales du rotor et la surface précitée de l'alésage.

Suivant l'invention, ce malaxeur est caractérisé en ce qu'il comprend des moyens pour régler automatiquement le jeu précité à partir de paramètres dépendant de la résistance rencontrée par le rotor lors du malaxage des polymères. Cette résistance dépend de l'état des polymères (grains ou pâte) et/ou de leur viscosité. Plus le jeu est faible, plus les contraintes mécaniques subies par les polymères en passant entre les pales et l'alésage sont importantes, et, par suite, plus la température de malaxage est élevée. De plus, grâce à ce jeu réglable, le malaxeur conforme à l'invention est utilisable pour une large variété de polymères.

En cours de fonctionnement, le rotor rencontre une résistance variable qui dépend de la nature des polymères des dimensions des grains de polymère et de l'état d'avancement du malaxage. Cette résistance étant variable, la température du produit malaxé a tendance à évoluer au cours du temps. On évite grâce à
l'invention, que cette température évolue dans un sens
défavorable en modifiant au cours du temps, automatiquement le jeu compris entre l'alésage et le rotor. On
obtient ainsi un produit malaxé dans des conditions
optimales qui est directement utilisable pour d'autres
opérations.

Selon une version avantageuse de l'invention,
les paramètres précités sont la température et/ou la
pression régnant au voisinage de l'alésage, ou encore
la puissance consommées par le moteur, d'entraînement
en rotation du rotor. Tous ces paramètres varient en
fonction de la résistance rencontrée par le rotor lors
du malaxage des polymères.

Selon une version préférée de l'invention,
les moyens pour régler automatiquement le jeu précité,
comprennent une sonde de température disposée dans l'alésage entre le rotor et la sortie du malaxeur, cette
sonde de température étant reliée à un comparateur associé à un dispositif de consigne et à un régulateur commandant un servo-moteur capable de déplacer axialement
le rotor. Cette disposition permet d'asservir le réglage du jeu en question à la température mesurée en fonctionnement.

D'autres particularités et avantages de la
présente invention ressortiront encore de la description
ci-après. Aux dessins annexés, donnés à titre d'exemples
non limitatifs:

- la figure 1 est une vue en coupe longitudinale, avec arrachements, du malaxeur conforme à l'invention;

- la figure 2 est une vue en coupe partielle
suivant le plan II-II de la figure 1;

- la figure 3 est une vue en coupe, à échelle

0014125

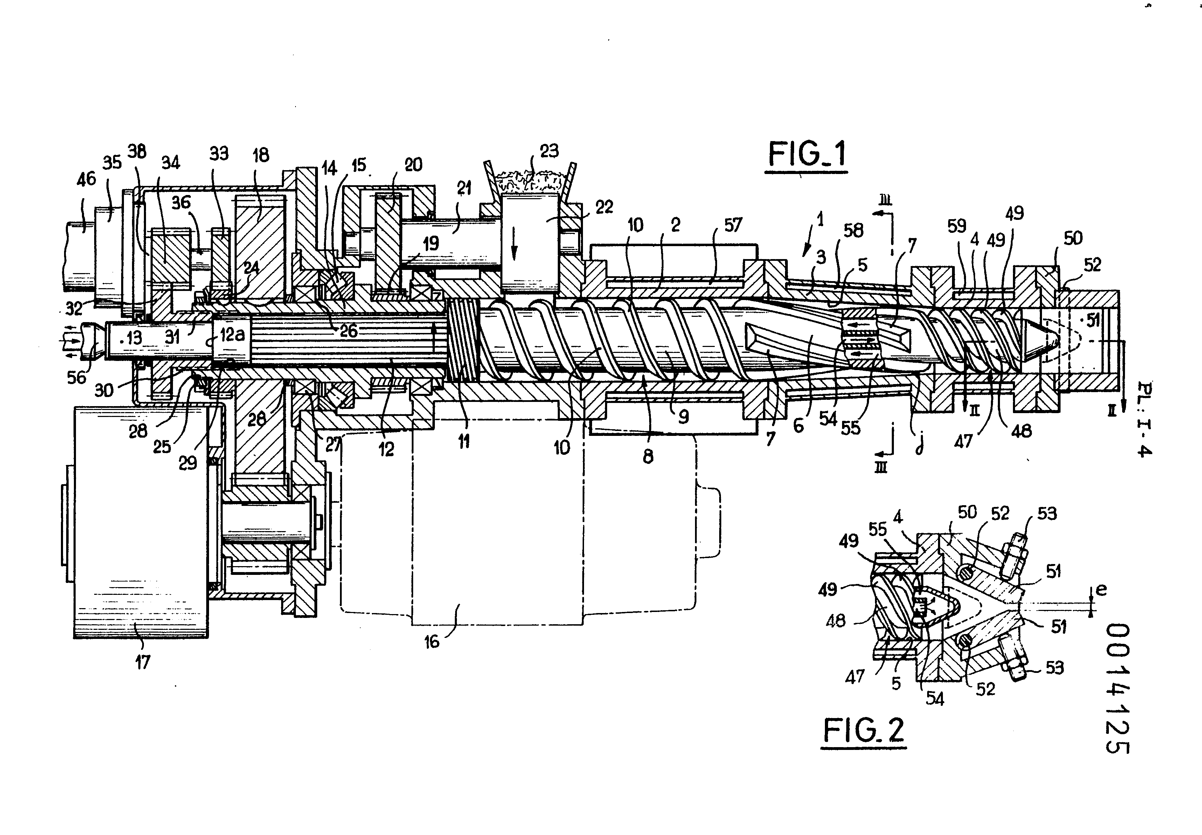

agrandie, suivant le plan III-III de la figure 1;

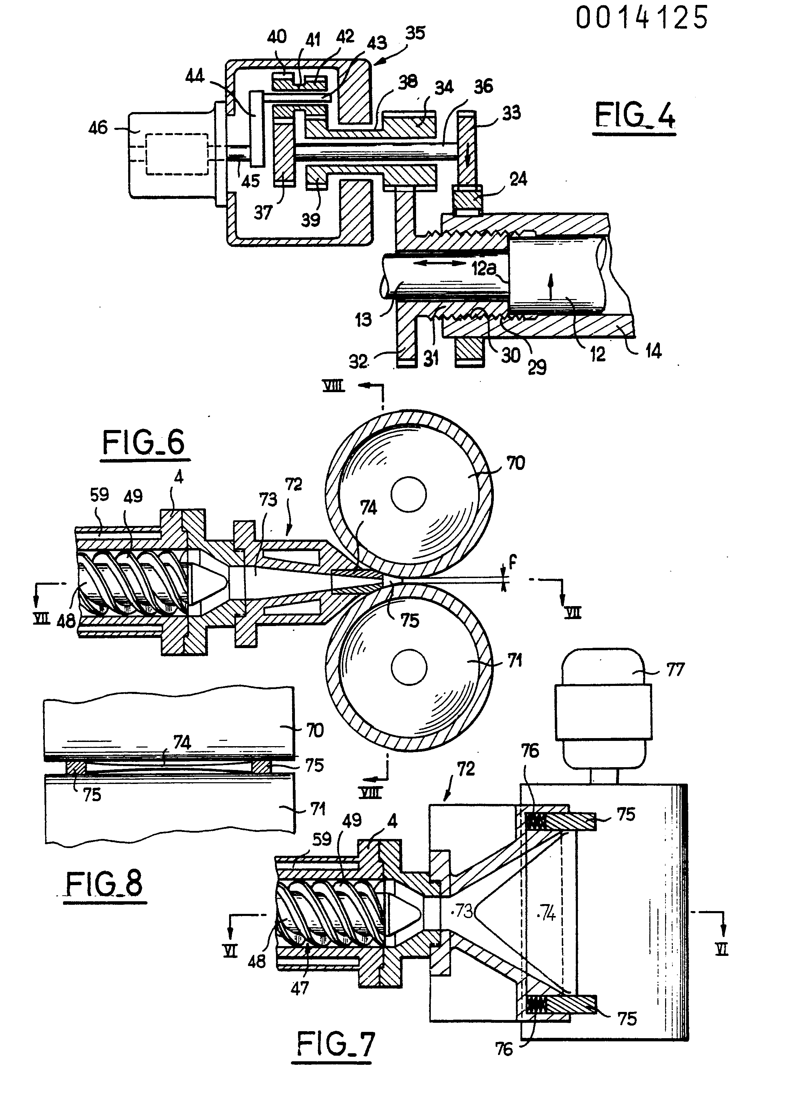

- la figure 4 est une vue en coupe longitudinale du système de réglage du jeu entre les pales du rotor et la surface adjacente de l'alésage interne;

- la figure 5 est une vue en coupe longitudinale d'un malaxeur conforme à l'invention et des moyens de réglage automatique de la température et de la pression de malaxage;

- la figure 6 est une vue en coupe partielle selon le plan VI-VI de la figure 7 du malaxeur dont la sortie est équipée de canaux de laminage;

- la figure 7 est une vue en coupe suivant le plan VII-VII de la figure 6;

- la figure 7 est une vue en coupe partielle suivant le plan VIII-VIII de la figure 6;

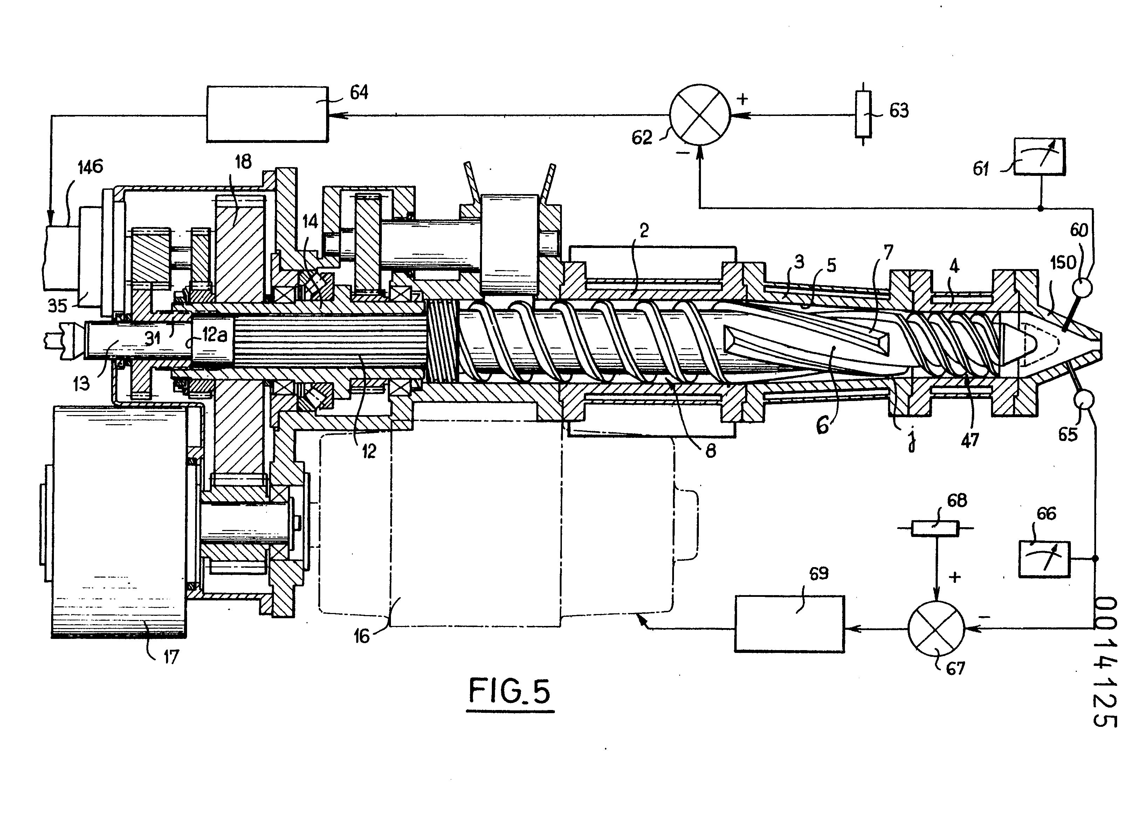

- la figure 9 est une vue en coupe longitudinale d'une variante d'exécution comprenant une alimentation double; et

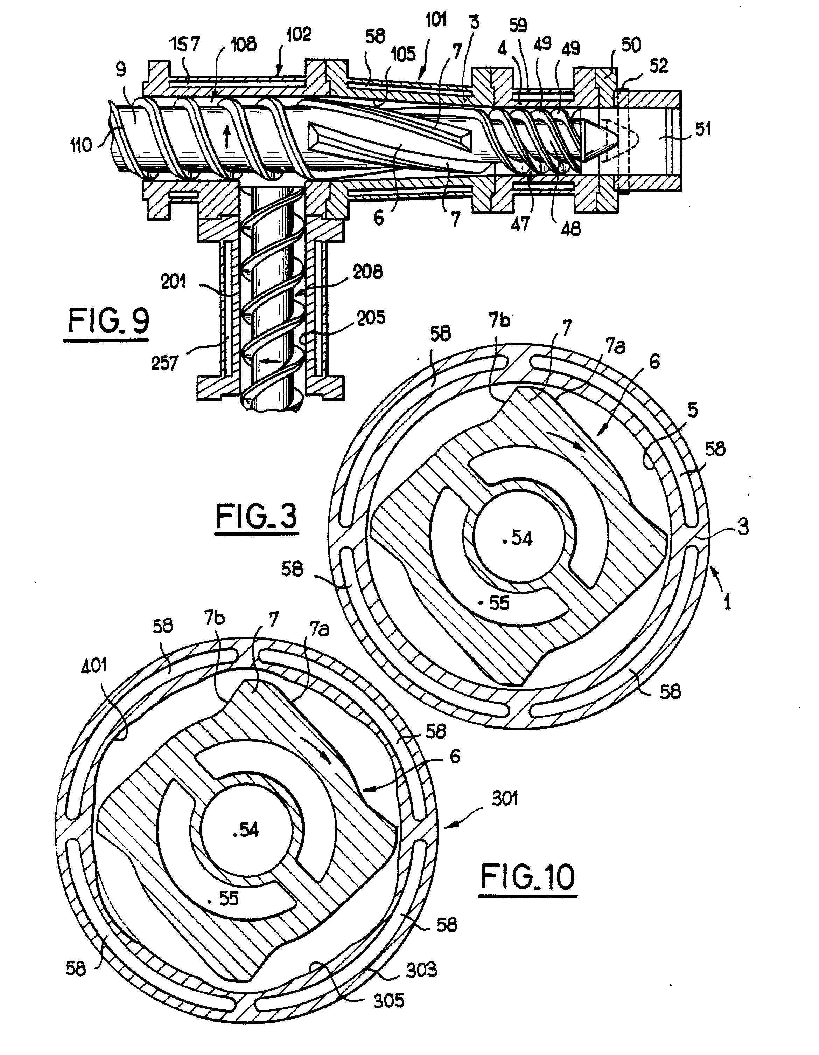

- la figure 10 est une vue analogue à la figure 3, dans laquelle la paroi de l'alésage du corps présente des évidements longitudinaux.

En référence à la figure 1, le malaxeur comprend un corps 1 comportant principalement trois tronçons 2, 3, 4, assemblés bout à bout. Le corps 1 présente un alésage interne 5 traversant les tronçons 2, 3, 4. Un rotor 6 est monté en rotation dans cet alésage interne 5 et porte des pales 7 hélicoïdales. Le rotor 6 est légèrement tronconique et la partie de l'alésage interne 5 qui l'entoure présente une conicité correspondante. Un jeu j est ménagé entre le sommet des pales 7 et l'alésage interne 5. On voit sur la figure 3 que les pales 7 ont un profil asymétrique, en pente douce sur la face avant 7a, et en pente plus abrupte sur leur face arrière 7b.

Le rotor 6 est prolongé, à partir de son extrémité de section la plus importante, par une vis d'alimentation 8 comprenant un noyau 9 et deux filets 10. La vis d'alimentation 8 est montée sensiblement sans jeu entre le sommet des filets 10 et l'alésage interne 5. Elle est elle-même prolongée successivement par un organe d'étanchéité 11, un arbre cannelé 12, puis un arbre lisse 13 de moindre diamètre que ce dernier. L'arbre cannelé 12 et l'arbre lisse 13 sont séparés par un épaulement 12a.

Dans la suite de la description, on désignera par "ensemble mobile" l'ensemble qui comprend le rotor 6, la vis d'alimentation 8, l'organe d'étanchéité 11, l'arbre cannelé 12 et l'arbre lisse 13. On désignera par amont du malaxeur, la partie du malaxeur située à proximité de l'arbre lisse 13, et par aval du malaxeur, la partie du malaxeur située à l'opposé de l'amont.

Sur l'arbre cannelé 12 est monté un manchon cannelé 14 correspondant qui est donc solidaire en rotation de l'arbre cannelé 12, mais qui est libre en translation axiale par rapport à ce dernier. En raison de la présence du roulement à rouleaux coniques 15, le manchon 14 ne peut pas se déplacer par rapport au corps 1 dans la direction de l'amont.

Un moteur 16 est relié à un réducteur de vitesse 17 qui entraîne une couronne dentée 18 clavetée sur le manchon 14. L'entraînement en rotation de l'ensemble mobile s'effectue donc par l'intermédiaire du manchon 14 et de la couronne dentée 18.

Le manchon 14 porte une denture 19 pour entraîner par l'intermédiaire d'un pignon 20 et d'un arbre 21 un galet 22, de construction connue, destiné à faire entrer de force les matières premières 23 dans la vis d'alimentation 8.

Une roue dentée 24 est clavetée sur le manchon 14, à son extrémité opposée à la vis d'alimentation 8.

Un écrou 25 bloque en translation axiale sur le manchon 14, contre un épaulement 26 de ce manchon 14, un roulement à billes 27, une entretoise 28, la couronne 18 et la roue dentée 24.

Cette extrémité du manchon 14 présente un taraudage 29 engagé sur un filetage 30 correspondant pratiqué sur un fourreau cylindrique 31 solidaire d'une roue dentée 32 montée folle sur l'arbre lisse 13, et de même diamètre que la roue dentée 24.

L'ensemble mobile est ·libre en translation entre une première position extrême dans laquelle l'épaulement 12a est en appui sur le fourreau 31 et une seconde position extrême dans laquelle le jeu j est nul. La première position extrême dépend de la position du fourreau 31 par rapport au manchon 14.

La roue dentée 24 engrène avec un pignon 33, alors que la roeu dentée 32 engrène un pignon large 34, de même diamètre que le pignon 33. La denture du pignon 34 est suffisamment large pour que la roue dentée 32 engrène convenablement ledit pignon 34, quelle que soit la position du fourreau 31 par rapport au manchon 14.

Les pignons 33 et 34 sont reliés l'une à l'autre par l'intermédiaire d'un réducteur à planétaires 35, comme décrit ci-après, en référence à la figure 4.

Le pignon 33 est relié par l'arbre intermédiaire 36 au planétaire 37, alors que le pignon large 34 est relié par le tube 38 au planétaire 39, de diamètre légèrement supérieur au diamètre du planétaire 37. Le tube 38 entoure l'arbre intermédiaire 36, de sorte que sont disposés successivement et coaxialement le pignon 33, le pignon large 34, le planétaire 39 et le planétaire 37.

Le planétaire 37 engrène une denture 40 d'un satellite 41 dont une autre denture 42, coaxiale à la denture 40, et de diamètre inférieur à la denture 40, engrène le planétaire 39. Dans l'axe des dentures 40 et 42, le satellite 41 est monté fou sur un doigt 43 d'un porte-satellite 44 solidaire d'un arbre de sortie 45 d'un moteur de commande 46 pouvant tourner dans les deux sens de rotation.

A l'opposé de la vis d'alimentation 8, le rotor 6 est prolongé par une vis terminale 47 comprenant un noyau 48 et deux filets 49. La vis terminale 47 est montée sensiblement sans jeu entre le sommet de ses filets 49 et la paroi de l'alésage interne 5.

Le pas des filets 10 de la vis d'alimentation 8 est plus grand que le pas des filets 49 de la vis terminale 47, et plus faible que le pas des pales 7 du rotor 6.

La vis terminale 47 fait aussi partie de l'ensemble mobile tel que défini plus haut. Ledit ensemble mobile est réalisé en une seule pièce.

Le corps 1 est terminé par un tronçon terminal 50 sur lequel deux plaques 51 s'articulent au moyen de deux axes respectifs 52. Deux goujons de réglage 53, visibles sur la figure 2, limitent l'écartement des deux plaques 51 et permettent, selon leur position, le réglage d'un écartement $\underline{e}$, et par suite, le réglage de la section de sortie des polymères ou élastomères malaxés.

L'ensemble tournant comprend deux cavités sensiblement coaxiales, une cavité interne 54 et une cavité périphérique 55, visibles sur les figures 1, 2 et 3. On voit sur la figure 2 que la cavité interne 54 communique avec la cavité périphérique 55 à l'extrémité libre de la vis terminale 47. Les cavités 54, 55 sont destinées à recevoir un fluide de refroidissement entrant et sortant par un dispositif à joint tournant 56 placé à l'extrémité libre de l'arbre lisse 13.

Les tronçons 2, 3, 4 comportent des cavités respectives 57, 58, 59 également destinées à un fluide de refroidissement.

Les débits du fluide de refroidissement sont réglés pour que l'ensemble mobile soit plus chaud que le corps 1; ainsi, les polymères adhèrent davantage au corps 1 qu'à l'ensemble mobile et n'ont donc pas tendance à tourner avec l'ensemble mobile.

Le fonctionnement du malaxeur représenté aux figures 1 à 4 est le suivant:.

Introduits par le galet 22, les polymères à malaxer 23 pénètrent dans l'alésage interne 5 où la vis d'alimentation 8 les achemine vers le rotor 6. Une compression s'exerce sur les polymères, car la vis terminale 41 et l'écartement $e$ limitent leur débit.

Comme le pas des pales 7 est supérieur à celui des filets 10, les polymères 23 sous pression s'écoulent entre les pales 7 et la paroi de l'alésage interne 5, par le jeu $j$. Cet écoulement est favorisé par le profil asymétrique des pales 7. Les polymères 23 subissent ainsi les contraintes mécaniques qui assurent leur malaxage.

Si le jeu $j$ est faible, ces contraintes sont importantes et la température de malaxage est élevée. Inversement, si le jeu $j$ est important, les contraintes sont faibles et la température aussi.

La pression qui s'exerce sur les polymères tend à augmenter le jeu $j$, et donc à pousser le rotor 6 en direction de l'amont. En fonctionnement, l'ensemble mobile est donc maintenu dans sa première position extrême telle que définie ci-dessus. Par son épaulement 12a, l'arbre cannelé 12 prend appui sur le fourreau 31 qui, par suite, tend à tirer vers l'amont le manchon 14 qui est maintenu par le roulement à rouleaux coniques 15.

Quand le moteur 46 est déconnecté, son arbre de sortie 45 peut tourner sensiblement sans résistance mécanique. Comme, en outre, le mouvement de vissage du fourreau 31 dans le manchon 14 ne peut s'opérer qu'avec des frottements relativement importants, l'arbre intermédiaire 36, le porte-satellite 44, l'arbre de sortie 45 et le tube 38 tournent à la même vitesse. Ainsi, le fourreau 31 tourne à la vitesse du manchon 14, de sorte que ce fourreau 31 est fixé par rapport au manchon 14.

Si l'utilisateur commande la mise en route du moteur électrique 46, le porte-satellite 44 tourne à la vitesse du moteur électrique 46, qui est très supérieure à la vitesse de l'arbre intermédiaire 36 entraîné par le manchon 14.

Si on appelle VM la vitesse de rotation du moteur 46 et du porte-satellite 44, VA la vitesse de rotation de l'arbre intermédiaire 36 et VT la vitesse de rotation du tube 38, la raison $\underline{r}$ du réducteur est donnée par la formule de WILLIS:

$$\underline{r} = \frac{VT - VM}{VA - VM}$$

en posant $\underline{k} = 1 - \underline{r}$, on a:

$$VA - VT = \underline{k}(VA - VM).$$

On déduit de cette formule que si le moteur électrique 46 est branché pour tourner dans le sens de l'arbre intermédiaire 36, le tube 38 tourne plus vite que l'arbre intermédiaire 36, de sorte que le fourreau 31 se dévisse du manchon 14. Le jeu $\underline{j}$ va donc augmenter et la température de malaxage va diminuer.

Si, par contre, le moteur électrique 46 est branché pour tourner en sens inverse de l'arbre intermédiaire 36, le tube 38 tourne moins vite que l'arbre intermédiaire 36, de sorte que le fourreau 31 se visse dans le manchon 14. Le jeu $j$ diminue et la température de malaxage augmente.

En pratique, on peut avoir les valeurs numériques suivantes:

$$VA = 7,85 \text{ rd/s}$$
$$k = 0,01$$

Si:

$$VM = + 157 \text{ rd/s}$$
$$VA - VT = 0,01 (7,85 - 157)$$
$$= - 1,49 \text{ rd/s}$$

Par contre, si:

$$VM = - 157 \text{ rd/s}$$
$$VA - VT = 0,01 (7,85 + 157)$$
$$= + 1,65 \text{ rd/s}$$

Le réglage de l'écartement $e$ des plaques 51 influe sur la température et la pression de malaxage. Si l'écartement $e$ est faible, le débit de polymères 23 dans le malaxeur est faible, de sorte que les polymères 23 sont fortement comprimés par la vis d'alimentation 8, et qu'ils sont malaxés plus longuement et sont donc davantage échauffés. Inversement, un écartement $e$ important correspond à une pression et une température de malaxage faibles.

Ainsi, en agissant conjointement sur le jeu $j$ et l'écartement $e$, la plage de réglage possible est particulièrement étendue et on peut passer d'une matière première à une autre très différente en se contentant de modifier ces réglages.

Des essais ont montré que, pour une matière première donnée, il existe une zone de réglage du jeu $j$ assez réduite dans laquelle ce jeu $j$ influe fortement sur la température de malaxage. En dehors de cette zone de réglage, le jeu $j$ est sensiblement sans influence sur la température de malaxage. Cette zone de réglage est centrée sur un jeu moyen $jm$ qui diffère d'une matière première à l'autre.

La figure 5 représente une réalisation de l'invention dans laquelle le réglage du jeu $j$ est commandé automatiquement par la température relevée dans un tronçon terminal 150, monté à la place du tronçon terminal 50 des figures 1 et 2.

Dans cette variante, la température est mesurée dans le tronçon terminal 150 au moyen d'une sonde de température 60, et est affichée sur un cadran d'affichage 61. Le signal de mesure de la température, émis par la sonde de température 60 est comparé au moyen d'un comparateur 62 au signal émis par un dispositif de consigne 63.

Le signal émis par le comparateur 62 est régulé dans le régulateur 64 et sert ensuite à commander un servo-moteur 146 qui remplace le moteur 46 de la figure 1 et qui est capable de déplacer axialement le rotor 6 pour modifier le jeu $j$.

Cette variante comprend encore un asservissement de la vitesse de rotation du manchon 14 à la pression relevée dans le tronçon terminal 150.

La pression est mesurée à l'aide d'un capteur de pression 65 disposé dans la paroi du tronçon terminal 150, et est affichée sur le cadran d'affichage 66. Le signal de mesure de la pression émis par le capteur de pression 65 est comparé dans le comparateur 67 au signal émis par un dispositif de consigne 68.

Le signal émis par le dispositif de consigne 68 commande un variateur de vitesse 69 (dont la disposition est représentée schématiquement sur la figure 5), monté entre le moteur 16 et le réducteur 17.

Les autres organes du malaxeur de la figure 5 sont identiques à ceux du malaxeur de la figure 1.

Le malaxeur de la figure 5 fonctionne de la façon suivante:

Quand le signal émis par la sonde de température 60 correspond à une température plus faible que la température de consigne, le comparateur 62 émet un signal électrique positif qui commande le servo-moteur 146, de façon qu'il tourne en sens inverse de l'arbre intermédiaire 36 et assure un mouvement de vissage du fourreau 31 dans le manchon 14, ce qui fait diminuer le jeu j et augmente la température de malaxage. Le signal émis par le comparateur 62 tend donc à s'annuler.

Inversement, quand le signal émis par la sonde de température 60 correspond à une température plus forte que la température de consigne, le servo-moteur 146 est commande de façon à faire augmenter le jeu j et, par suite, à faire diminuer la température de malaxage. Là encore, le signal émis par le comparateur 62 tend à s'annuler.

Si la température mesurée est égale à la température de consigne, le comparateur 62 n'émet aucun signal, le servo-moteur 146 n'est donc pas alimenté et le fourreau 31 est immobile par rapport au manchon 14.

Quand le signal émis par la sonde de pression 65 correspond à une pression inférieure à la pression de consigne, le variateur de vitesse 69 est commandé de façon à augmenter la vitesse de rotation de l'ensemble mobile.

Inversement, si le signal émis par la sonde de pression 65 correspond à une pression supérieure à la pression de consigne, le variateur de vitesse 69 est commandé de façon à diminuer la vitesse de rotation de l'ensemble mobile.

Si la pression mesurée est égale à la pression de consigne,la vitesse de rotation de l'ensemble mobile est maintenue inchangée.

Cette version de l'invention, dans laquelle la température du polymère est régulée par asservissement, est particulièrement avantageuse pour certaines applications dans lesquelles il importe que cette température reste sensiblement constante.

C'est ainsi que dans l'opération de calandrage, qui consiste à produire une pellicule à partir d'une matière plastique à l'état pâteux, toute variation de la température de la matière plastique à l'entrée dans la calandre se traduit par une variation d'épaisseur indésirable de la pellicule produite. En alimentant la calandre avec des polymères produits par un malaxeur conforme à cette dernière version de l'invention, ce risque est évité.

C'est ainsi également qu'un caoutchouc auquel on a ajouté un accélérateur de vulcanisation ne doit pas être surchauffé si l'on veut éviter sa carbonisation. Cette version de l'invention permet de malaxer un tel caoutchouc en évitant tout risque de carbonisation.

Cette version de l'invention permet également de régler la température en agissant sur un paramètre supplémentaire qui est la vitesse de rotation de l'ensemble mobile.

Bien entendu, on pourrait prévoir un malaxeur ne comportant que l'une ou l'autre des deux chaînes d'asservissement que comporte cette version sans sortir du cadre de l'invention.

Les figures 6, 7, 8 représentent une autre variante de l'invention dans laquelle la sortie des polymères malaxés s'effectue entre deux rouleaux de laminage 70, 71 par l'intermédiaire d'une buse d'éjection 72. L'orifice d'entrée 73 de cette buse 72 est circulaire. Son orifice de sortie 74 est élargi et aplati; il est plus mince au centre que sur les bords, comme le montre la figure 8, de façon à établir une distribution uniforme des pertes de charges sur toute la largeur de l'orifice de sortie 74.

De part et d'autre de l'orifice de sortie 74, des tampons d'étanchéité 75, par exemple en polyamide, sont pousés par des ressorts 76 entre les rouleaux 70, 71.

Les rouleaux 70, 71 sont entraînés par un moteur électrique à vitesse variable 77. Ils reposent sur des paliers à vérin (non représentés) permettant de faire varier l'écartement $f$ des cylindres.

Dans cette version du malaxeur, les polymères malaxés sont envoyés par la buse d'éjection 72 entre les rouleaux de laminage 70, 71. Les tampons 75 assurent l'étanchéité latérale.

Les rouleaux 70, 71 peuvent avoir, selon le réglage combiné de leur vitesse de rotation et de l'écartement $f$, une action de traction ou au contraire de retenue des polymères malaxés, et respectivement provoquer une diminution ou une augmentation de la température de malaxage. Une vitesse de rotation faible et/ou un écartement $f$ faible correspondent à un débit de produits malaxés faible, donc à une température de malaxage élevée. Par contre, une vitesse de rotation élevée et un écartement $f$ important correspondent à un débit important et à une température de malaxage faible.

Cette version du malaxeur conforme à l'invention permet donc d'agir sur trois paramètres, à savoir le jeu $\underline{j}$, la vitesse de rotation des rouleaux 70, 71, et l'écartement $\underline{f}$, pour régler la température de malaxage, et est donc particulièrement intéressante quand on veut malaxer successivement des matières premières très variées.

La figure 9 représente une version particulière du malaxeur conforme à l'invention. Sur cette figure, les éléments inchangés par rapport à la figure 1 sont désignés par les mêmes références, les éléments modifiés par une référence supérieure à 100, et les éléments nouveaux par une référence supérieure à 200.

Ce malaxeur comporte un corps **101 comprenant** trois tronçons 102, 103, 104 et dans lequel est ménagé un alésage interne 105. Le tronçon 102 est prévu pour le montage d'un corps auxiliaire 201, comportant un alésage auxiliaire 205 débouchant dans l'alésage interne 105 à proximité du rotor 6. Dans cet alésage auxiliaire 205 est montée une vis auxiliaire d'alimentation 208. Le corps auxiliaire 201 comporte une cavité 257 pour la circulation d'un fluide de refroidissement.

Un tel malaxeur permet d'opérer le mélange de deux polymères ou de deux mélanges différents de polymères en cours de malaxage. Les caractéristiques géométriques des deux vis d'alimentation 108, 208 et leur vitesse de rotation sont prévues pour obtenir les proportions voulues pour le mélange.

La figure 10 représente une autre variante d'exécution du malaxeur conforme à l'invention. Sur cette figure, les éléments inchangés par rapport à la figure 1, sont affectés des mêmes références, alors que les éléments modifiés sont affectés d'une référence augmentée de 300, et les éléments nouveaux d'une référence supérieure à 400.

Dans cette variante, un alésage 305 comporte des alvéoles longitudinaux 401. Ces alvéolées 401 sont au nombre de six, alors que le rotor 6 comprend quatre pales 7.

Ainsi, au cours de la rotation du rotor 6, le jeu entre le sommet des pales 7 et la paroi de l'alésage 305 varie selon qu'une pale 7 donnée est en face ou non d'un alvéole longitudinal 401. Cette disposition provoque un effet de compression suivi d'une détente des polymères se trouvant entre le sommet des pales 7 et l'alésage 305. Les essais ont montré que cet effet était favorable au malaxage. Comme le nombre des alvéoles 401 est différent du nombre des pales 7, le fonctionnement se fait sans à-coups et la vitesse de rotation de l'ensemble mobile reste sensiblement constante.

Le malaxeur conforme à l'invention peut être appliqué à tous les polymères qui peuvent être rendus pâteux par compression et/ou échauffement. Une des applications préférées de l'invention est le malaxage des élastomères tels que le caoutchouc naturel ou synthétique. Dans cette application, le caoutchouc, à l'état de poudre, est mélangé à d'autres adjuvants, puis transformé en produit pâteux qui peut être injecté directement dans un moule.

L'invention peut également s'appliquer aux résines thermoplastiques comme le chlorure de polyvinyle. Dans cette application, le malaxage transforme le produit en une pâte qui peut être par exemple laminée directement sous forme de feuilles.

Bien entendu, l'invention n'est pas limitée aux exemples qui viennent d'en être donnés.

C'est ainsi que le malaxeur peut comporter, au niveau du rotor 6, une arrivée sous pression pour additifs ou adjuvants.

Le pas des filets de la vis d'alimentation 8 peut être décroissant de l'amont vers l'aval; cette disposition permet à la vis d'alimentation d'assurer par elle-même la compression des polymères indépendamment de la vis terminale 47.

Les pales du rotor peuvent être rectilignes.

La sonde de température 60 peut être disposée en tout point du malaxeur compris entre le rotor 6 et la sortie des produits malaxés.

Le réglage du jeu $j$ peut être réalisé manuellement ou encore être asservi à la pression de malaxage, à l'aide d'une sonde de pression ou à la puissance consommée par le moteur 15, à l'aide d'un wattmètre.

Le réglage de l'écartement $e$, ou, dans le cas du malaxeur comportant les rouleaux 70, 71, l'écartement $f$ et la vitesse des rouleaux 70, 71 peuvent être asservis à la température ou à la pression de malaxage, à la puissance consommée par le moteur 15, ou tout autre paramètre qui varie en fonction de la résistance rencontrée par le rotor lors du malaxage des polymères.

Pour que l'ensemble mobile soit plus chaud que le corps 1, il est possible de prévoir que le circuit de fluide de refroidissement de l'ensemble mobile soit monté en série après le circuit de refroidissement du corps 1.

Complémentairement à l'effet de la pression des polymères à malaxer, il est possible de prévoir des moyens pour déplacer l'ensemble mobile vers l'amont quand le fourreau 31 se dévisse du manchon 14.

## REVENDICATIONS

1.  Malaxeur en continu pour polymères comprenant un corps comportant un alésage interne dans lequel est monté en rotation un rotor portant des pales, et des moyens d'introduction pour introduire sous pression un ou des polymères dans l'alésage précité, ce(s) polymère(s) étant à l'état granuleux, pulvérulent ou pâteux, la surface balayée par les sommets des pales du rotor étant sensiblement tronconique, la surface de l'alésage adjacente à ce rotor étant complémentaire de la surface balayée précitée, et comprenant des moyens pour déplacer axialement le rotor par rapport au corps pour pouvoir régler le jeu entre les sommets des pales du rotor et la surface précitée de l'alésage, ce malaxeur étant caractérisé en ce qu'il comprend des moyens pour régler automatiquement le jeu (j) à partir de paramètres qui dépendent de la résistance rencontrée par le rotor (6) lors du malaxage des polymères.

2.  Malaxeur conforme à la revendication 1, caractérisé en ce que lesdits paramètres sont la température et/ou la pression régnant au voisinage de l'alésage (5), ou encore la puissance consommées par le moteur (16) d'entraînement en rotation du rotor (6).

3.  Malaxeur conforme à la revendication 2, caractérisé en ce que les moyens pour régler automatiquement le jeu (j), comprennent une sonde de température (60) disposée dans l'alésage (5) entre le rotor (6) et la sortie (150) du malaxeur, cette sonde de température (60) étant reliée à un comparateur (62) associé à un dispositif de consigne (63) et à un régulateur (64) commandant un servo-moteur (146) capable de déplacer axialement le rotor (6).

0014125

4. Malaxeur conforme à la revendication 3, caractérisé en ce que la sonde de température (60) est disposée dans le tronçon de sortie (150) du malaxeur.

5. Malaxeur conforme à l'une quelconque des revendications 1 à 4, caractérisé en ce que les moyens pour régler le jeu précité, comprennent un capteur de pression (65) disposé dans le tronçon de sortie (150) du malaxeur.

6. Malaxeur conforme à l'une quelconque des revendications 1 à 5, caractérisé en ce que les moyens pour déplacer axialement le rotor (6) comprennent un manchon (14) cannelé intérieurement adapté sur un arbre cannelé (12) correspondant prolongeant le rotor (16), un fourreau (31) se vissant au bout du manchon, ce fourreau étant en appui axial sur l'arbre cannelé (12) et étant relié en rotation au manchon (14) par l'intermédiaire d'un réducteur à planétaires (35) comportant un porte-satellite (44) rendu solidaire de l'arbre de sortie (45) d'un moteur de commande (46).

7. Malaxeur conforme à l'une quelconque des revendications 1 à 6, caractérisé en ce que l'orifice de sortie du malaxeur comprend des moyens (51) (53) pour régler la section de passage (e) des polymères par ladite sortie, et en ce que lesdits moyens sont commandés par des moyens de mesure de la température au voisinage du rotor (6).

8. Malaxeur conforme à l'une quelconque des revendications 1 à 7, caractérisé en ce que l'orifice de sortie du malaxeur comprend des moyens pour régler la vitesse de passage des polymères dans cet orifice de sortie.

9. Malaxeur conforme à la revendication 8, caractérisé en ce que ces moyens sont commandés par des moyens de mesure de la température au voisinage du rotor (6).

PL: I-4

0014125

FIG_1

FIG.2

0014125

FIG. 9

FIG. 3

FIG. 10

0014125

FIG_4

FIG_6

FIG_8

FIG_7

PL. IV. 4

0014125

FIG.5

**Office européen des brevets**

**RAPPORT DE RECHERCHE EUROPEENNE**

00 14 125

Numéro de la demande

EP 80 40 0054

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | US - A - 3 486 192 (UNION CARBIDE) <br> * Figure 4; colonne 3, lignes 20-25 * <br><br> -- <br><br> DE - A - 2 054 615 (SCHENKEL) <br> * Ensemble du brevet * <br><br> -- | 1 <br><br><br><br><br> 1 | B 29 F 3/01 |
| A | DE - A - 2 054 616 (SCHENKEL) <br> * Ensemble du brevet * <br><br> -- | | **DOMAINES TECHNIQUES RECHERCHES (Int. Cl. 3)** <br><br> B 29 F |
| A | FR - A - 1 089 299 (BICC) <br> * Figures 1-9; page 3 * <br><br> -- | | |
| A | DE - A - 2 455 931 (USM) <br> * Figures 1-3; page 8 * <br><br> ---- | | |

Le présent rapport de recherche a été établi pour toutes les revendications

| Lieu de la recherche | Date d'achevement de la recherche | Examinateur |
|---|---|---|
| La Haye | 06-03-1980 | KUSARDY |

OEB Form 1503.1   06.78